# EUROPÄISCHE PATENTSCHRIFT

(11) **EP 3 328 614 B1**
(45) Veröffentlichungstag und Bekanntmachung des Hinweises auf die Patenterteilung: **20.05.2020**
(21) Anmeldenummer: 16753599.6
(22) Anmeldetag: 27.07.2016
(51) Int. Cl.: B29C 53/06, B32B 3/12, B32B 29/00, B29L 24/00

(54) **EINLAGIGER FALTKERN**
SINGLE-LAYER FOLDING CORE
ÂME PLIÉE D'UNE SEULE ÉPAISSEUR

(30) Priorität: 27.07.2015 DE 102015009928; 27.07.2015 DE 202015005410 U
(43) Veröffentlichungstag der Anmeldung: 06.06.2018
(73) Patentinhaber: Pietsch, Karsten, 23966 Wismar (DE)
(72) Erfinder: Pietsch, Karsten, 23966 Wismar (DE)
(74) Vertreter: Gulde & Partner
(86) Internationale Anmeldenummer: PCT/EP2016/067932
(87) Internationale Veröffentlichungsnummer: WO 2017/017149

(56) Entgegenhaltungen:
- DE-U1-202014 002 924
- Anonymous: "Yoshizawa-Randlett system - Wikipedia", , 28 January 2019 (2019-01-28), XP55595260, Retrieved from the Internet: URL:https://en.wikipedia.org/wiki/Yoshizaw a-Randlett_system [retrieved on 2019-06-11]

## Beschreibung

Die Erfindung betrifft einen einlagigen Faltkern zur Herstellung einer Leichtbaustruktur.

Mehrschichtige Leichtbaustrukturen umfassend einen Kern, der zwischen zwei Deckschichten angeordnet ist, werden üblicherweise als Sandwichstrukturen oder Sandwichbauteile bezeichnet und sind dem Fachmann bekannt. Sie zeichnen sich durch ein geringes Gewicht bei gleichzeitig hoher Steifigkeit aus. Es ist bekannt, für die Herstellung von Sandwichbauteilen Kerne aus beispielsweise Werkstoffen auf Zellulosebasis, Polymere, Schaumwerkstoffe wie Polyurethan oder Holz einzusetzen. Derartigen Kernen können je nach Anwendungsgebiet unterschiedlichste Formen gegeben werden. Beispielhaft seien hier Wellenstrukturen oder Wabenkernstrukturen genannt. Der Nachteil bekannter Sandwichplatten ist, dass diese nur begrenzt zu einer elastischen Verformung zwecks einer Formgebung der herzustellenden Struktur geeignet sind. Komplexe Freiformen lassen sich so kaum realisieren. Ferner sind derartige Kerne nach erstmaliger Formgebung nur noch begrenzt flexibel in ihrer Gestalt und es bedarf, beispielsweise bei Schaumkernen, einer Herstellung eines neuen Kerns, wenn sich die Struktur des Erzeugnisses verändert.

Die DE 20 2014 002 924 U1 beschreibt einen Kern für ein Sandwichbauteil, der aus zwei gefalteten Teillagen besteht.

Aufgabe der vorliegenden Erfindung ist es, einen Faltkern zur Herstellung einer Leichtbaustruktur zu schaffen, der flexibel gestaltbar, stabil und möglichst einfach aufgebaut ist und sich als modulares Baukastensystem eignet.

Die Aufgabe wird durch die Gegenstände der unabhängigen Ansprüche 1, 4 und 7 gelöst.

Die vorliegende Erfindung betrifft ein Verfahren zur Herstellung eines Faltkerns für eine Leichtbaustruktur, wobei in einem ersten Verfahrensschritt Biegelinien auf ein umformbares flächiges Halbzeug aufgebracht werden, das in zwei kongruenten Teilbereichen mit quadratischen Außenkonturen und einer gemeinsamen Biegelinie mit einem zwei Werkzeughälften umfassenden Umformwerkzeug umgeformt wird, indem eine Werkzeughälfte eine erste Umformkraft erzeugt, die einer durch eine andere Werkzeughälfte erzeugten zweiten Umformkraft entgegengerichtet ist und die beide orthogonal zu dem flächigen Halbzeug wirken und dann in einem zweiten Verfahrensschritt ein dreidimensionaler Faltkern hergestellt wird, indem simultan Querkräfte aufgebracht werden, die eine zueinander und zu der ersten und zweiten Umformkraft orthogonale Wirkrichtung haben.

Erfindungsgemäß ist vorgesehen, dass die eine Werkzeughälfte Biegelinien aufweist, die zentrisch in einem für den ersten Teilbereich vorgesehenen Abschnitt der einen Werkzeughälfte ein Quadrat bilden, dessen Kanten parallel zu den Außenkonturen des ersten Teilbereichs verlaufen, und dass die eine Werkzeughälfte weitere Biegelinien aufweist, die in einem für den zweiten Teilbereich vorgesehenen Abschnitt der einen Werkzeughälfte zwei Rechtecke bilden, die mit jeweils einer Kante auf den Außenkonturen liegen, und dass die eine und die andere Werkzeughälfte kollineare Biegelinien aufweisen, deren Aneinanderreihung jeden der zwei Teilbereiche mit quadratischen Außenkonturen in zwei Rechtecke halbiert und die zwei Teilbereiche mit quadratischen Außenkonturen insgesamt in vier Rechtecke unterteilt, und dass die eine und die andere Werkzeughälfte diagonal ausgerichtete Biegelinien aufweisen, deren Verlängerungen die Außenkonturen in einem 45-Grad-Winkel schneiden, wobei alle diagonalen Biegelinien, die der einen Werkzeughälfte zugeordnet sind und in dem Abschnitt für den ersten Teilbereich liegen, eine identische Gesamtlänge aufweisen, wie alle diagonalen Biegelinien der einen Werkzeughälfte in dem Abschnitt für den zweiten Teilbereich und alle diagonalen Biegelinien, die der anderen Werkzeughälfte zugeordnet sind und in dem Abschnitt für den ersten Teilbereich liegen, eine identische Gesamtlänge aufweisen, wie alle diagonalen Biegelinien der anderen Werkzeughälfte in dem Abschnitt für den zweiten Teilbereich.

Das Verfahren der Erfindung bietet zum einen den Vorteil, dass ein Faltkern herstellbar ist, der einlagig ist und dabei an seiner Ober- und Unterseite Bereiche aufweist, die im Wesentlichen planen Auflageflächen entsprechen. Somit lässt er sich besonders einfach für Konstruktionszwecke verwenden und ist beispielsweise gegenüber dem genannten Stand der Technik signifikant vereinfacht herstellbar und aufgebaut. Dennoch ist der herstellbare Faltkern mit seinesgleichen kompatibel, das heißt, dass mehrere der Faltkerne ineinandergesteckt werden können. Weiterhin ist der herstellbare Faltkern größenskalierbar. Dies kann sowohl durch Herstellung eines Faltkerns unter Skalierung des ersten und zweiten Teilbereichs erfolgen, als auch durch Herstellung mehrerer erster und/oder zweiter Teilbereiche nebeneinander beziehungsweise aneinander. Dies wird im Folgenden noch näher beschrieben. Dabei ist das Verfahren der Erfindung besonders einfach und schnell durchführbar. Besonders einfach und schnell sind auch unterschiedliche Faltkerne herstellbar. Rein beispielhaft kann lediglich die Größe des Halbzeugs verändert werden, welches dann eine entsprechend größere oder kleinere Fläche des Werkzeugs bedeckt. Die herstellbaren Faltkerne sind vorteilhafterweise in ihrer Steifigkeit anpassbar. Dies kann rein exemplarisch durch Hinzufügen entsprechender Biegelinien zur Herstellung von Versteigungsrippen am Faltkern erfolgen oder auch durch Skalierung der Größe des ersten und zweiten Teilbereichs

In bevorzugter Ausgestaltung der vorliegenden Erfindung ist vorgesehen, dass das Umformwerkzeug eine zusätzliche Anzahl an Abschnitten für erste Teilbereiche und für zweite Teilbereiche umfasst, so dass eben diese zusätzliche Anzahl an kongruenten Teilbereichen mit umgeformt wird und sich dadurch ein größenskalierter Faltkern ergibt.

Mit anderen Worten ausgedrückt ist vorzugsweise vorgesehen, dass ein größenskalierter Faltkern hergestellt wird, indem das verwendete Umformwerkzeug wenigstens einen zusätzlichen Abschnitt für einen zusätzlichen ersten Teilbereich und/oder wenigstens einen zusätzlichen Abschnitt für einen zusätzlichen zweiten Teilbereich umfasst.

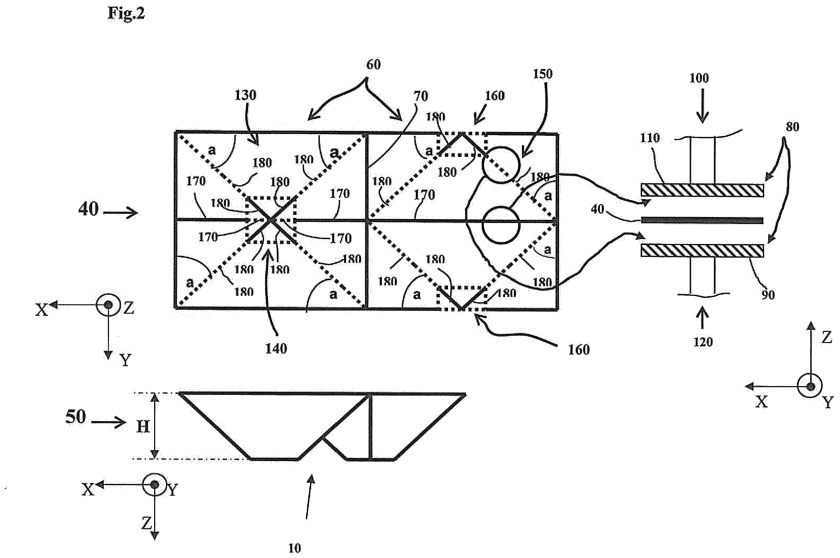

Jeder vorhandene zusätzliche Abschnitt für einen zusätzlichen ersten Teilbereich schließt sich dabei entweder in einer y-Richtung (vergleiche Figur 2) an eine Außenkontur eines anderen ersten Teilbereichs an oder schließt sich in einer x-Richtung (vergleiche Figur 2) an eine Außenkontur eines zweiten Teilbereichs an.

Zudem schließt sich jeder vorhandene zusätzliche Abschnitt für einen zusätzlichen zweiten Teilbereich entweder in y-Richtung an eine Außenkontur eines anderen zweiten Teilbereichs an oder schließt sich in x-Richtung an eine Außenkontur eines ersten Teilbereichs an.

Somit ergibt sich für das Verfahren, dass zumindest ein zusätzlicher kongruenter Teilbereich des umformbaren flächigen Halbzeugs mit umgeformt wird. Vorzugsweise werden wenigstens zwei zusätzliche kongruente Teilbereiche umgeformt. Weiterhin bevorzugt wird eine Anzahl zusätzlicher kongruenter Teilbereiche umgeformt, die mit einer gewünschten Größe des herzustellenden Faltkerns korrespondiert. Dabei ist es dem Fachmann selbstverständlich, dass er die Gesamtgröße des flächigen umformbaren Halbzeugs an die Größe des Umformwerkzeugs beziehungsweise des herzustellenden Faltkerns anpassen muss.

Vor dem Hintergrund des Beschriebenen wird angemerkt, dass der Begriff der Außenkonturen der kongruenten Teilbereiche nicht zwangsläufig bedeutet, dass die Außenkonturen das flächige Halbzeug oder gar den Faltkern nach außen hin begrenzen. Sofern sich weitere kongruente Teilbereiche anschließen, bildet eine Außenkontur hier lediglich einen Übergang zwischen zwei unterschiedlichen kongruenten Teilbereichen.

In bevorzugter Ausgestaltung der vorliegenden Erfindung erfolgt bei nicht-formstabilen Halbzeugen eine Nachbehandlung zur Herstellung formstabiler Eigenschaften und bei formstabilen Halbzeugen eine Erzeugung von Prozessbedingungen zur Herstellung nicht-formstabiler Eigenschaften.

Bevorzugt werden geeignete Prozessbedingungen geschaffen, um ein Vermögen von Werkstoffen zur plastischen Verformung herzustellen. Rein beispielhaft kann dies bei Werkstoffen wie Metall oder Thermoplasten eine Temperaturregelung sein. So lassen sich die entsprechenden Werkstoffe vorteilhafterweise gut in dem Verfahren verarbeiten und sind nach Abschluss des Verfahrens formstabil. Werden beispielsweise imprägnierbare Materialien wie Papier oder auch CFK verwendet, so sind diese nach Herstellung des Faltkerns noch flexibel. Bevorzugt erfolgt eine Nachbehandlung zur Herstellung formstabiler Eigenschaften. Dies kann beispielsweise durch eine Behandlung mit Kunstharz in einer entsprechenden Form erfolgen. Das flächige Halbzeug eignet sich dabei besonders gut für Beschichtungen sowie strukturierte und aus unterschiedlichen Materialien bestehende mehrschichtige Beschichtungen, wodurch der Aufwand des Verfahrens sehr gering ist. Die Faltkerne sind dann zunächst noch flexibel formbar und können in einer gewünschten Gestalt fixiert werden. Werkstoffabhängig liegen also als Eingabe in das Verfahren flexible oder formstabile Halbzeuge vor. Handelt es sich um formstabile Halbzeuge, so werden diese zur Durchführung des Verfahrens mit dem Fachmann bekannten Mitteln flexibel gemacht. Handelt es sich um von sich aus flexible Halbzeuge, werden diese bevorzugt in einer Nachbehandlung formstabil gemacht.

Vorteilhafterweise lassen sich mit dem Verfahren Faltkerne mit unterschiedlichsten und komplexen Formen herstellen. Im formstabilen Zustand weisen diese Faltkerne auch ohne Deckflächen enorme statische Eigenschaften auf, so dass sie sich auch als eigenständige Leichtbaustruktur einsetzen lassen.

Zur Aufbringung der Biegelinien können Rotationsstanzen, Flachbettplotter, Prägestanzen oder andere dem Fachmann bekannte Werkzeuge verwendet werden.

In bevorzugter Ausgestaltung der vorliegenden Erfindung ist vorgesehen, dass eine Anzahl an kongruenten Teilbereichen umgeformt wird, die einem Vielfachen von Zwei entspricht. So lassen sich vorteilhafterweise sehr kompakte bis hin zu sehr große Faltkerne herstellen.

Ein weiterer Aspekt der vorliegenden Erfindung betrifft einen Faltkern für eine Leichtbaustruktur, hergestellt aus einem umformbaren flächigen Halbzeug, umfassend zwei Arten von Elementarzellen, die miteinander paarweise vorliegen, wobei die erste Art von Elementarzelle und die zweite Art von Elementarzelle aus zwei kongruenten Teilbereichen mit quadratischen Außenkonturen des Halbzeugs in dem erfindungsgemäßen Verfahren hergestellt sind.

Derartige Faltkerne bieten den Vorteil, dass sie einfach und schnell herstellbar sowie flexibel gestaltbar sind sowie eine große Formstabilität und definierbare Steifigkeitseigenschaften aufweisen. Derartige Faltkerne sind vorteilhafterweise skalierbar und eignen sich als modulares Baukastensystem.

Die erfindungsgemäßen Faltkerne können aus einer Vielzahl unterschiedlicher Werkstoffe hergestellt werden. Hierzu zählen beispielsweise metallische Werkstoffe, Glas, CFK, GFK, Naturfasern, Basaltfasern, Papier, Elastomere (Gummi, Polyurethan usw.), thermoplastische Materialien sowie imprägnierbare Materialien. Die erfindungsgemäßen Faltkerne eignen sich beispielsweise auch als Betonschalung oder zur Wärmedämmung.

Die erfindungsgemäßen Faltkerne können mit einer Vielzahl unterschiedlicher Bindemittel formstabil gemacht werden. Hierzu zählen beispielsweise Kunstharze, Wasserglas, Zement, Casein, Lignin, Acrylate, Gummi, Silicon, Latex usw.

Imprägnierbare Materialien können sowohl mit aushärtenden Bindemitteln als auch mit elastischen Bindemitteln imprägniert werden. Faltkerne aus Gummi oder Elastomere eignen sich beispielweise für Matratzen, Reifen und Dichtungen. Faltkerne aus Kohlefaser und Zement eignen sich beispielsweise als Textilbeton oder Faserbeton für den Betonfertigteilbau.

Je nachdem, welche Material-Kombination gewählt wird, können erfindungsgemäße Faltkerne mit unterschiedlichen Eigenschaften hergestellt werden.

In bevorzugter Ausgestaltung der vorliegenden Erfindung ist vorgesehen, dass die Elementarzellen an einer Oberseite und an einer Unterseite jeweils in einer Ebene enden. Dies bietet den Vorteil, dass an der Oberseite und der Unterseite Auflageflächen gebildet werden. Beispielsweise ist der Faltkern über die Auflageflächen ausgebildet, Kräfte aufzunehmen und zu leiten und kann darüber hinaus mit weiteren Strukturelementen verbunden werden.

In weiterer bevorzugter Ausgestaltung der vorliegenden Erfindung ist vorgesehen, dass der Faltkern eine Anzahl an Paaren von Elementarzellen der ersten Art und der zweiten Art umfasst, so dass der Faltkern entsprechend dieser Anzahl größenskaliert ist. Somit lassen sich vorteilhafterweise auch großflächige Faltkerne herstellen.

Ein weiterer Aspekt der vorliegenden Erfindung betrifft ein Strukturbauteil, umfassend einen erfindungsgemäßen Faltkern und wenigstens einen weiteren Faltkern, wobei der Faltkern und der weitere Faltkern ineinandergesteckt sind. Solche Strukturbauteile bieten den Vorteil, dass sie zugleich flexibel gestaltbar sind und hohe Belastungen aufnehmen können.

In bevorzugter Ausgestaltung der vorliegenden Erfindung ist vorgesehen, dass das Strukturbauteil wenigstens einen weiteren Faltkern umfasst und mehrere Faltkerne ineinandergesteckt sind. Ein solches Strukturbauteil bietet den Vorteil, dass es auch großvolumig herstellbar ist und zudem mit Drainageeigenschaften versehen werden kann. Durch Kombination geeigneter Faltkerne lassen sich Drainagestrukturen in bis zu drei Ebenen herstellen. Die Drainageeigenschaften ergeben sich aus zwischen den ineinandergesteckten Faltkernen gebildeten Kanälen, die sich durch die spezielle Struktur der Faltkerne ergeben. Besonders vorteilhaft sind auf Grund der Struktur der Faltkerne die unterschiedlichen Ebenen fluidtechnisch voneinander entkoppelt, wenn die Faltkerne vollständig ineinandergesteckt sind.

In weiterer bevorzugter Ausgestaltung der vorliegenden Erfindung ist vorgesehen, dass wenigstens zwei Faltkerne ineinandergesteckt sind, von denen wenigstens ein erster Faltkern aus anderen Elementarzellen besteht, als wenigstens ein zweiter Faltkern. Dies bietet den Vorteil, dass komplexe Verbindungen möglich sind und zudem die Steifigkeitseigenschaften innerhalb des Strukturbauteils variabel sind.

Ausgehend von dem erfindungsgemäßen Verfahren lässt sich zunächst der erfindungsgemäße Faltkern herstellen. Mit dem erfindungsgemäßen Faltkern lässt sich weiterhin das erfindungsgemäße Strukturbauteil herstellen. Daher gelten die zu den jeweiligen Aspekten der Erfindung genannten Vorteile entsprechend auch für alle anderen Aspekte der Erfindung.

Die einzelnen offenbarten Merkmale lassen sich ferner vorteilhaft miteinander kombinieren, sofern nichts Abweichendes gesagt ist.

Die Erfindung wird nachfolgend anhand eines Ausführungsbeispiels und dazugehöriger Zeichnungen näher erläutert. Die Figuren zeigen:
- Figur 1: eine schematische Darstellung eines Paares von Elementarzellen einer ersten Art und einer zweiten Art in einer bevorzugten Ausführungsform;
- Figur 2: eine schematische Darstellung eines erfindungsgemäßen Verfahrens anhand eines Faltschemas eines Paares von Elementarzellen einer ersten Art und einer zweiten Art in einer bevorzugten Ausführungsform;
- Figur 3: eine schematische Darstellung eines erfindungsgemäßen Faltkerns in einer bevorzugten Ausführungsform;
- Figur 4: eine schematische Darstellung eines erfindungsgemäßen Strukturbauteils in einer bevorzugten Ausführungsform;
- Figuren 5-7: weitere schematische Darstellungen unterschiedlicher Faltschemata von Paaren von Elementarzellen einer ersten Art und einer zweiten Art in bevorzugten Ausführungsformen;
- Figur 8: eine schematische Darstellung eines ergänzenden Faltschemas und einen damit herstellbaren ergänzenden Faltkern in einer bevorzugten Ausführungsform;
- Figur 9: eine schematische Darstellung eines aus zwei ergänzenden Faltkernen zusammengesteckten ergänzenden Strukturteils basierend auf einem ergänzenden Faltschema in einer bevorzugten Ausführungsform;
- Figuren 10-13: schematische Darstellungen von Strukturbauteilen bestehend aus je einem erfindungsgemäßen Faltkern und je einem ergänzenden Faltkern basierend auf einem ergänzenden Faltschema in einer bevorzugten Ausführungsform;
- Figur 14: eine schematische Darstellung von Strukturbauteilen bestehend aus mehreren Faltkernen bestehend aus jeweils unterschiedlichen Elementarzellen in einer bevorzugten Ausführungsform;
- Figuren 15-19: schematische Darstellungen weiterer erfindungsgemäßer Faltschemata von Paaren von Elementarzellen einer ersten Art und einer zweiten Art in bevorzugter Ausführungsform, die Hilfsbiegelinien aufweisen; und
- Figur 20: eine schematische Darstellung von Strukturbauteilen bestehend aus mehreren Faltkernen bestehend aus jeweils unterschiedlichen Elementarzellen in einer bevorzugten Ausführungsform.

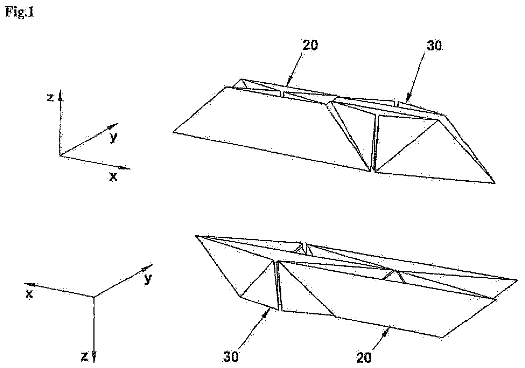

Figur 1 zeigt eine schematische Darstellung eines Paares von Elementarzellen einer ersten Art und einer zweiten Art in einer bevorzugten Ausführungsform. Der obere Teil der Figur 1 und der untere Teil der Figur 1 zeigen ein Paar von Elementarzellen eines erfindungsgemäßen Faltkerns in zwei unterschiedlichen Ansichten. Der obere Teil der Figur 1 zeigt das Paar von Elementarzellen in einer x-z-Ebene, wobei die Blickrichtung im Wesentlichen entlang der positiven y-Richtung ausgerichtet ist. Der untere Teil der Figur 1 zeigt das Paar von Elementarzellen, ebenfalls in der x-z-Ebene, wobei diese gegenüber dem oberen Teil der Figur 1 im Wesentlichen um 180 Grad um die y-Achse rotiert ist. Das Paar von Elementarzellen umfasst eine erste Art von Elementarzelle 20 und eine zweite Art von Elementarzelle 30.

Figur 2 zeigt eine schematische Darstellung eines erfindungsgemäßen Verfahrens anhand eines Faltschemas eines Paares von Elementarzellen einer ersten Art und einer zweiten Art in einer bevorzugten Ausführungsform. Der obere linke Teil von Figur 2 zeigt ein umformbares flächiges Halbzeug 40. Der untere linke Teil der Figur 2 zeigt einen in dem erfindungsgemäßen Verfahren hergestellten Faltkern 50. Der Faltkern 50 umfasst ein exemplarisch in Figur 1 beschriebenes Paar von Elementarzellen 10. Die Blickrichtung ist dabei in x-z-Ebene in negativer y-Richtung orientiert. Im Falle des umformbaren flächigen Halbzeugs 40 liegt die Blickrichtung in der x-y-Ebene in Richtung negativer z-Werte. Das umformbare flächige Halbzeug 40 umfasst zwei kongruente Teilbereiche mit quadratischen Außenkonturen 60. Diese Bereiche sind durch eine gemeinsame Biegelinie 70 voneinander abgegrenzt.

In einem ersten Verfahrensschritt wird das umformbare flächige Halbzeug 40, wie im mittleren rechten Teil der Figur 2 dargestellt, in der x-y-Ebene zwischen zwei Werkzeughälften 80 positioniert und durch eine Werkzeughälfte 90 eine erste Umformkraft 120 erzeugt und durch eine andere Werkzeughälfte 110 eine zweite Umformkraft 100 erzeugt. Die Umformkräfte 100, 120 wirken orthogonal zu dem umformbaren flächigen Halbzeug 40 und jeweils in entgegengesetzter z-Richtung. Die Biegelinien der Werkzeughälften 80 bzw. das Faltschema sind im oberen linken Teil der Figur 2 schematisch auf dem umformbaren flächigen Halbzeug 40 angedeutet. Die gestrichelten Biegelinien sind dabei der einen Werkzeughälfte 90 zugeordnet. Die durchgezogenen Linien sind der anderen Werkzeughälfte 110 zugeordnet. Die Zuordnung kann aber auch umgekehrt sein. In den Fällen, in denen Biegelinien mit Außenkonturen zusammenfallen, können sich in anderen Ausführungsbeispielen weitere kongruente Teilbereiche des umformbaren flächigen Halbzeugs 40 anschließen. Daher wird in diesem Ausführungsbeispiel nicht konsequent zwischen Biegelinie und Außenkonturen unterschieden. Eine Anzahl an Biegelinien der einen Werkzeughälfte 90 bilden zentrisch in einem für den ersten Teilbereich 130 vorgesehenen Abschnitt der einen Werkzeughälfte 90 ein in dem ersten Teilbereich 130 zentrisch angeordnetes Quadrat 140. Die Kanten des Quadrats 140 sind parallel zu den Außenkonturen und der gemeinsamen Biegelinie 70 angeordnet. Die eine Werkzeughälfte 90 weist eine weitere Anzahl Biegelinien auf, die in einem für den zweiten Teilbereich 150 vorgesehenen Abschnitt der einen Werkzeughälfte 90 zwei Rechtecke 160 bilden. Die Anzahl der Rechtecke 160 beträgt somit das Doppelte der Anzahl der vorliegenden Quadrate 140. Die Rechtecke 160 liegen teilweise auf den Außenkonturen des rechten der beiden kongruenten Teilbereiche mit quadratischen Außenkonturen 60. Die eine Werkzeughälfte 90 und die andere Werkzeughälfte 110 weisen weiterhin eine Anzahl an kollinearen Biegelinien 170 auf, deren Aneinanderreihung die kongruenten Teilbereiche mit quadratischen Außenkonturen 60 in insgesamt vier Rechtecke unterteilt. Jeder der kongruenten Teilbereiche mit quadratischen Außenkonturen 60 wird also in zwei Rechtecke halbiert. Ferner umfassen die eine Werkzeughälfte 90 und die andere Werkzeughälfte 110 eine Vielzahl an diagonal ausgerichteten Biegelinien 180. Deren Verlängerungen schneiden die Außenkonturen in einem Winkel a von 45 Grad. Gestrichelt dargestellte Linien sind Biegelinien, die der einen Werkzeughälfte 90 zugeordnet sind. Durchgezogen dargestellte Linien sind Biegelinien, die der anderen Werkzeughälfte 110 zugeordnet sind. Eine Gesamtlänge aller diagonaler Biegelinien 180, die der einen Werkzeughälfte 90 zugeordnet sind (gestrichelt) und die in dem Abschnitt für den ersten Teilbereich 130 liegen, entspricht der Gesamtlänge aller diagonaler Biegelinien 180, die dieser einen Werkzeughälfte 90 zugeordnet sind und die in dem Abschnitt für den zweiten Teilbereich 150 liegen. Selbiges gilt für die andere Werkzeughälfte 110. So entspricht eine Gesamtlänge aller diagonaler Biegelinien 180, die der anderen Werkzeughälfte 110 zugeordnet sind (durchgezogen) und die in dem Abschnitt für den ersten Teilbereich 130 liegen, der Gesamtlänge aller diagonaler Biegelinien 180 dieser anderen Werkzeughälfte 90 in dem für den zweiten Teilbereich 150 bestimmten Abschnitt.

In einem zweiten Verfahrensschritt wird dann ein dreidimensionaler Faltkern hergestellt. Dazu werden simultan Querkräftepaare in x- und y-Richtung auf das umformbare flächige Halbzeug 40 aufgebracht, wobei dieses über die Biegelinien in x- und y-Richtung komprimiert wird und in z-Richtung den dreidimensionalen Faltkern ausbildet. Bevorzugt werden die eine Werkzeughälfte 90 und die andere Werkzeughälfte 110 dabei kontrolliert geöffnet, um die Ausbildung des Paares von Elementarzellen 10 kontrolliert zu ermöglichen.

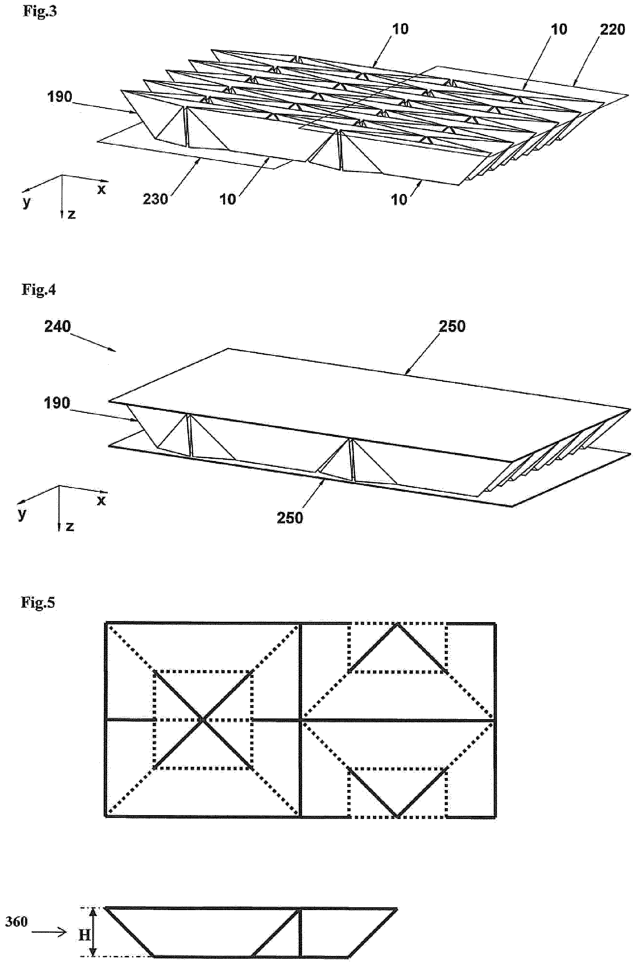

Figur 3 zeigt eine schematische Darstellung eines erfindungsgemäßen Faltkerns in einer bevorzugten Ausführungsform. Der Faltkern 190 umfasst eine Vielzahl an Paaren von Elementarzellen 10. Eine Oberseite und eine Unterseite des Faltkerns 190 liegen jeweils in einer Ebene 220, 230. Die Ebenen 220, 230 erstrecken sich jeweils über die gesamte Oberseite bzw. die gesamte Unterseite und sind hier nur schematisch angedeutet. Somit ergeben sich an der Oberseite und der Unterseite ebene Auflageflächen.

Figur 4 zeigt eine schematische Darstellung eines erfindungsgemäßen Strukturbauteils in einer bevorzugten Ausführungsform. Das Strukturbauteil 240 besteht aus einem erfindungsgemäßen Faltkern 190, an dessen Oberseite und Unterseite jeweils eine Platte 250 angeordnet ist.

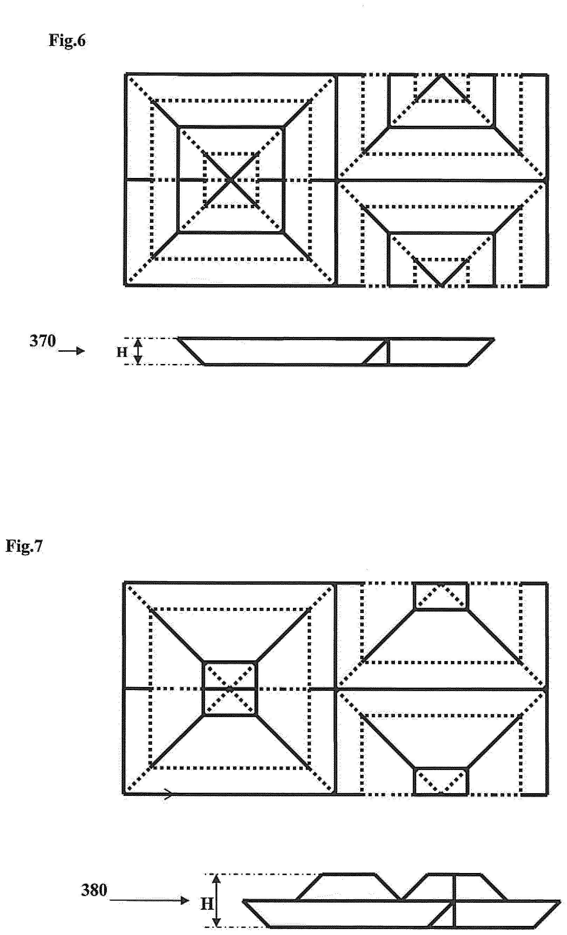

Die Figuren 5 bis 7 zeigen weitere schematische Darstellungen unterschiedlicher Faltschemata von Paaren von Elementarzellen einer ersten Art und einer zweiten Art in bevorzugten Ausführungsformen. Das in Figur 5 dargestellte Faltschema zeigt exemplarisch eine skalierte Form des Faltschemas der Figur 2. Aus der Figur 5 geht hervor, dass die gegenüber der Figur 2 veränderten Größenordnungen der Biegelinien zu einer geringeren Höhe h des ergebenden Faltkerns führen. Figur 6 zeigt exemplarisch ein weiteres Faltschema und einen sich ergebenden Faltkern mit einer gegenüber des in Figur 5 dargestellten Faltkerns weiter reduzierten Höhe h. Figur 7 zeigt ein weiteres alternatives Faltschema.

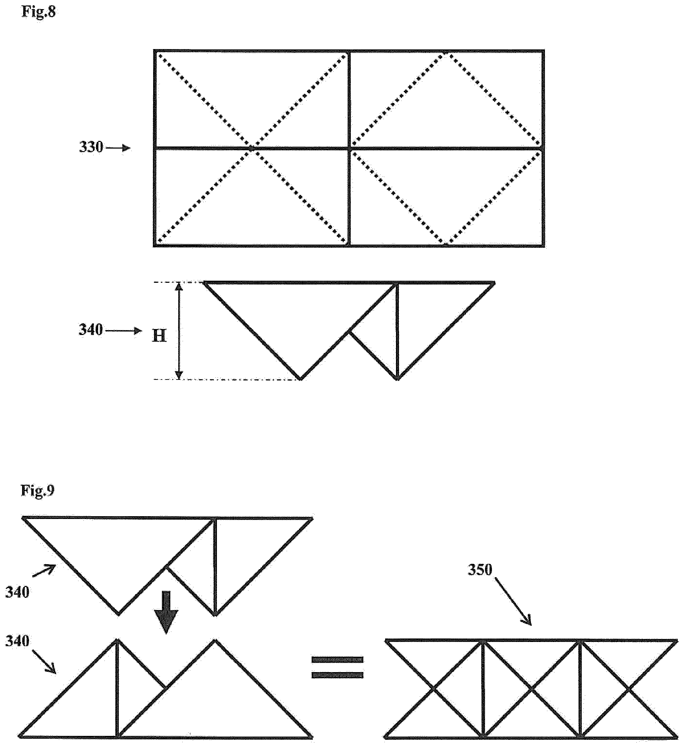

Figur 8 zeigt eine schematische Darstellung eines ergänzenden Faltschemas 330 und eines mit dem Faltschema herstellbaren ergänzenden Faltkerns 340, der sich mit einem erfindungsgemäßen Faltkern verbinden lässt, in einer bevorzugten Ausführungsform. Die Schritte zur Herstellung des Faltkerns aus Figur 2 sind, unter Berücksichtigung der unterschiedlichen Systematik der Biegelinien, auf die Herstellung des ergänzenden Faltkerns 340 übertragbar. Aus der Figur 8 geht hervor, dass dieser ergänzende Faltkern 340 an einer unteren Seite spitz zulaufende Formausprägungen 260 aufweist. Im Gegensatz dazu weisen die erfindungsgemäßen Faltkerne, wie zum Beispiel aus Figur 3, ebene Auflageflächen auf.

Figur 9 zeigt eine schematische Darstellung eines aus zwei ergänzenden Fattkernen 340 zusammengesteckten ergänzenden Strukturbauteils 350 basierend auf einem ergänzenden Faltschema 330 in einer bevorzugten Ausführungsform. Aus Figur 9 geht deutlich hervor, dass zur Herstellung des Strukturbauteils zwei einzelne ergänzende Faltkerne 340, die im linken Teil der Figur 9 dargestellt sind, ineinandergesteckt werden und zu dem auf der rechten Seite der Figur 9 dargestellten ergänzenden Strukturbauteil 350 führen. Das ergänzende Strukturbauteil 350 ist ein dichter Verbund beider ergänzender Faltkerne 340.

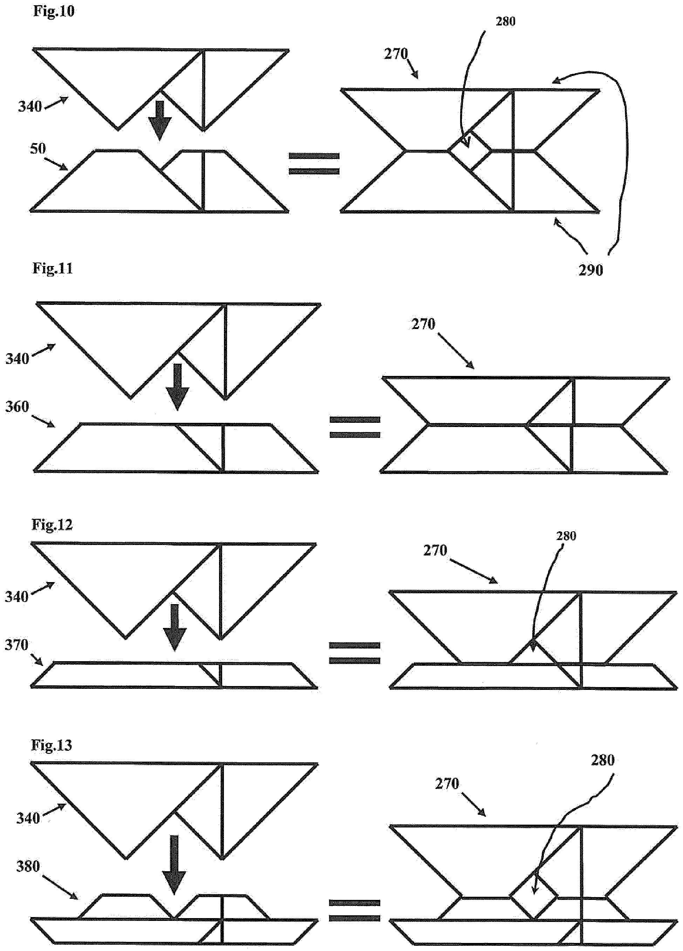

Die Figuren 10 bis 13 zeigen schematische Darstellungen von Strukturbauteilen bestehend aus je einem erfindungsgemäßen Faltkern und je einem ergänzenden Faltkern 340 basierend auf einem ergänzenden Faltschema 330 in einer bevorzugten Ausführungsform. Der linke Teil der

Figur 10 zeigt, wie ein ergänzender Faltkern 340, basierend auf einem ergänzenden Faltschema 330, das in Figur 8 beschrieben ist, mit einem erfindungsgemäßen Faltkern, der dem in Figur 2 beschriebenen Faltkern 50 entspricht, verbunden wird. Das sich ergebende Strukturbauteil 270 ist im rechten Teil der Figur 10 dargestellt. Deutlich erkennbar ist, dass Zwischenräume 280 ausgebildet werden, die eine Drainagefunktion erfüllen können. Das Strukturbauteil 270 weist planare Oberflächen 290 auf. Die Figuren 11 bis 13 zeigen in Analogie zu Figur 10 ebenfalls verschiedene Strukturbauteile 270. Die Figur 11 zeigt dabei links unten den in Figur 5 beschriebenen Faltkern 360. Figur 12 zeigt dabei links unten den in Figur 6 beschriebenen Faltkern 370. Figur 13 zeigt links unten den in Figur 7 beschriebenen Faltkern 380.

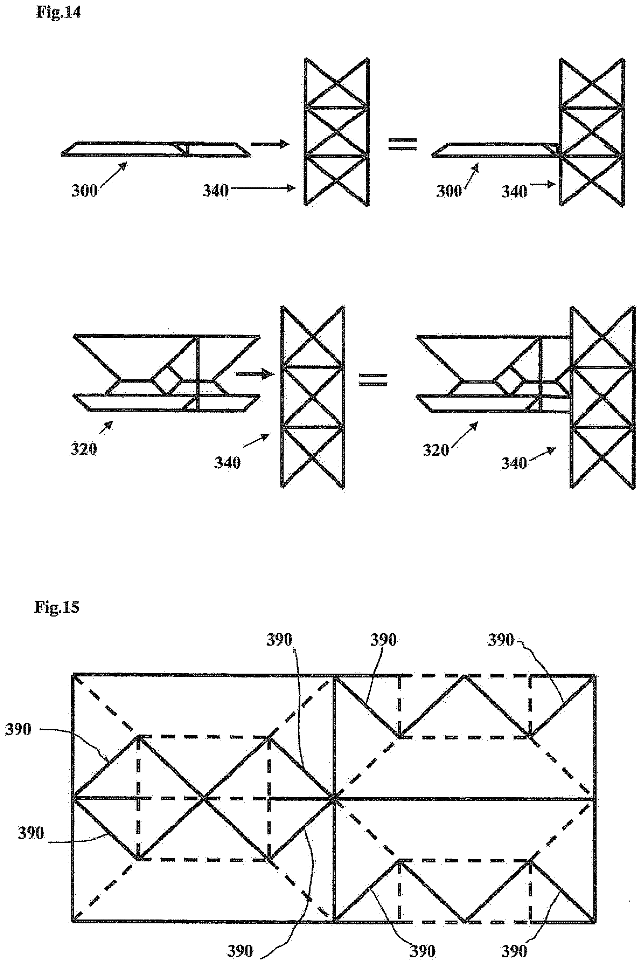

Figur 14 zeigt eine schematische Darstellung von Strukturbauteilen bestehend aus mehreren Faltkernen bestehend aus jeweils unterschiedlichen Elementarzellen in einer bevorzugten Ausführungsform. Der obere Teil der Figur 14 zeigt ein Strukturbauteil, umfassend einen erfindungsgemäßen Faltkern 300, der auch im linken unteren Teil der Figur 12 bzw. in Figur 6 beschrieben ist. Der Faltkern 300 ist seitlich in ein ergänzendes Strukturbauteil 340 steckbar, welches auf einem ergänzenden Faltschema 330 basiert. Dieses ergänzende Faltschema 330 ist auch in Figur 8 bzw. das ergänzende Strukturbauteil 340 ist auch in Figur 9 beschrieben. Der untere Teil der Figur 14 zeigt ein analoges Beispiel mit dem ergänzenden Strukturbauteil 340, in welches ein weiteres erfindungsgemäßes Strukturbauteil 320 einsteckbar ist. Das erfindungsgemäße Strukturbauteil 320 umfasst einen erfindungsgemäßen Faltkern 380, der in den Figuren 7 und 13 vorbeschrieben ist und umfasst darüber hinaus einen ergänzenden Faltkern 340, basierend auf einem ergänzenden Faltschema 330.

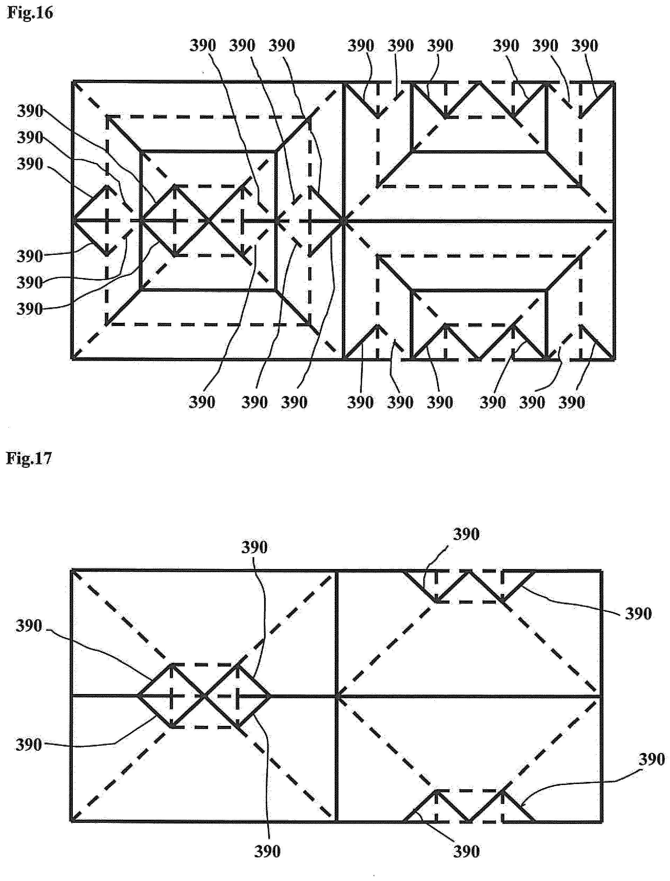

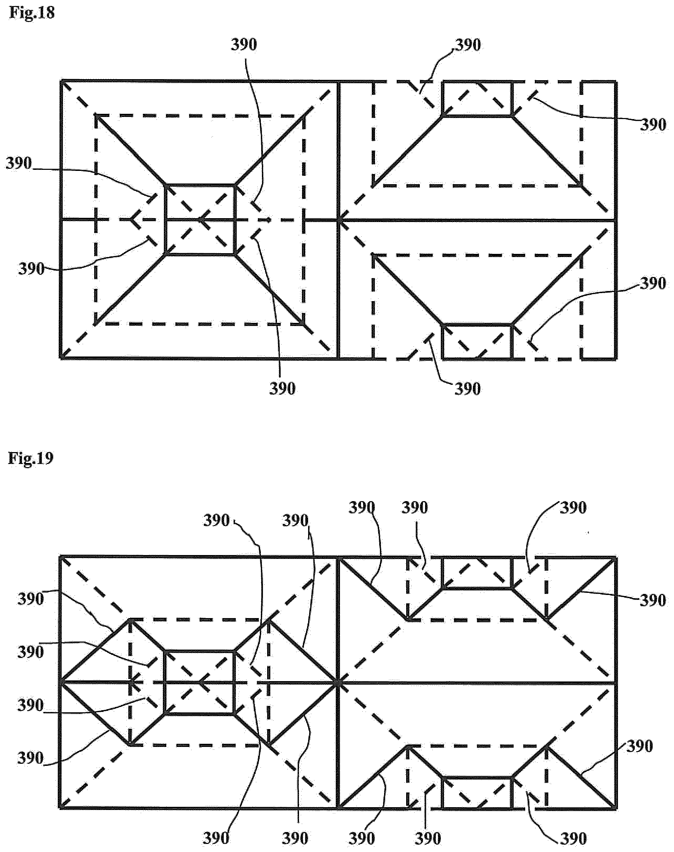

Die Figuren 15 bis 19 zeigen schematische Darstellungen weiterer erfindungsgemäßer Faltschemata von Paaren von Elementarzellen einer ersten Art und einer zweiten Art in bevorzugter Ausführungsform, die Hilfsbiegelinien aufweisen. Das in Figur 15 gezeigte Faltschema basiert dabei auf dem in der Figur 5 Beschriebenen. Die Hilfslinien 390 führen dazu, dass das Faltschema besser abarbeitbar ist beziehungsweise ein korrespondierender Faltkern einfacher herstellbar ist. Analog gilt dies für die Faltschemata, die in den Figuren 16 bis 19 dargestellt sind, wobei das in Figur 16 gezeigte Faltschema auf dem in der Figur 6 beschriebenen Faltschema basiert. Das in Figur 17 gezeigte Faltschema basiert auf dem in der Figur 2 beschriebenen Faltschema. Das in Figur 18 gezeigte Faltschema basiert auf dem in der Figur 7 beschriebenen Faltschema. Das in Figur 19 gezeigte Faltschema basiert ebenfalls auf dem in der Figur 7 beschriebenen Faltschema.

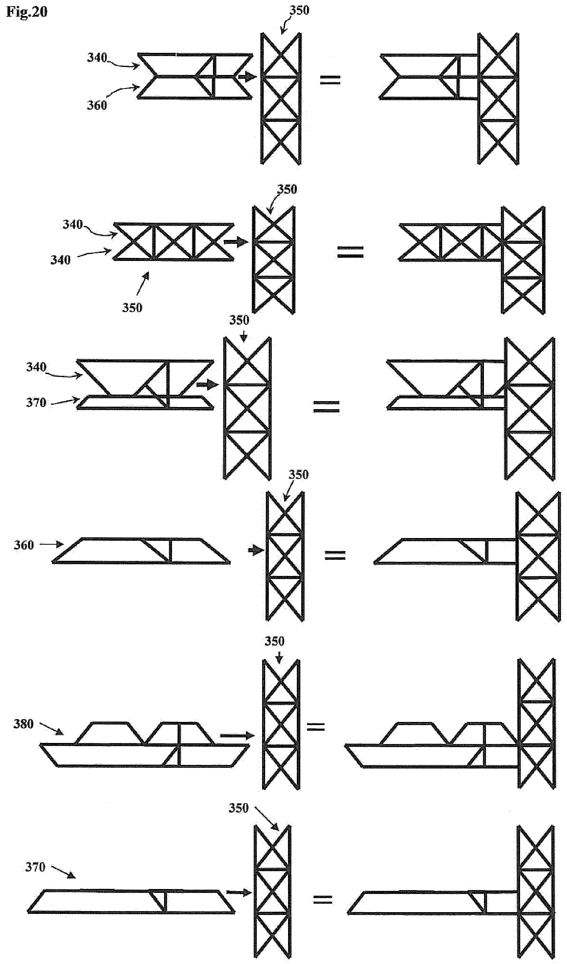

Figur 20 zeigt eine schematische Darstellung von Strukturbauteilen, bestehend aus mehreren Faltkernen bestehend aus jeweils unterschiedlichen Elementarzellen in einer bevorzugten Ausführungsform. Sofern die verwendeten Bezugszeichen denen aus einer der Figuren 1 bis 19 entsprechen, so handelt es sich um gleiche Merkmale. Das in der jeweiligen Figur 1 bis 19 Beschriebene gilt dann auch für Figur 20.

### Bezugszeichen

- 10: Paar von Elementarzellen
- 20: erste Art von Elementarzelle
- 30: zweite Art von Elementarzelle
- 40: umformbares flächiges Halbzeug
- 50: Faltkern
- 60: kongruente Teilbereiche mit quadratischen Außenkonturen
- 70: gemeinsame Biegelinie
- 80: Werkzeughälften
- 90: eine Werkzeughälfte
- 100: zweite Umformkraft
- 110: andere Werkzeughälfte
- 120: erste Umformkraft
- 130: erster Teilbereich
- 140: Quadrat
- 150: zweiter Teilbereich
- 160: Rechtecke
- 170: kollineare Biegelinien
- 180: Vielzahl an diagonal ausgerichteten Biegelinien
- 190: Faltkern
- 200: Oberseite
- 210: Unterseite
- 220: Ebene
- 230: Ebene
- 240: Strukturbauteil
- 250: Platte
- 260: spitz zulaufende Formausprägungen
- 270: Strukturbauteil
- 280: Zwischenräume
- 290: planare Oberflächen
- 300: Faltkern
- 320: weiteres Strukturbauteil
- 330: ergänzendes Faltschema
- 340: ergänzender Faltkern
- 350: ergänzendes Strukturbauteil
- 360: Faltkern
- 370: Faltkern
- 380: Faltkern
- 390: Hilfslinie
- a: Winkel
- h: Höhe

## Patentansprüche

1. Verfahren zur Herstellung eines Faltkerns (50, 190, 300, 360, 370, 380) für eine Leichtbaustruktur, wobei in einem ersten Verfahrensschritt Biegelinien (70, 170, 180) auf ein umformbares flächiges Halbzeug (40) aufgebracht werden, das in zwei kongruenten Teilbereichen mit quadratischen Außenkonturen (60) und einer gemeinsamen Biegelinie (70) mit einem zwei Werkzeughälften (80) umfassenden Umformwerkzeug umgeformt wird, indem eine Werkzeughälfte (90) eine erste Umformkraft (120) erzeugt, die einer durch eine andere Werkzeughälfte (110) erzeugten zweiten Umformkraft (100) entgegengerichtet ist und die beide orthogonal zu dem flächigen Halbzeug (40) wirken und dann in einem zweiten Verfahrensschritt ein dreidimensionaler Faltkern (50, 190, 300, 360, 370, 380) hergestellt wird, indem simultan Querkräfte aufgebracht werden, die eine zueinander und zu der ersten (120) und zweiten Umformkraft (100) orthogonale Wirkrichtung haben,
**dadurch gekennzeichnet, dass**
die eine Werkzeughälfte (90) Biegelinien aufweist, die zentrisch in einem für den ersten Teilbereich (130) vorgesehenen Abschnitt der einen Werkzeughälfte (90) ein Quadrat (140) bilden, dessen Kanten parallel zu den Außenkonturen des ersten Teilbereichs (130) verlaufen, und
die eine Werkzeughälfte (90) weitere Biegelinien aufweist, die in einem für den zweiten Teilbereich (150) vorgesehenen Abschnitt der einen Werkzeughälfte (90) zwei Rechtecke (160) bilden, die mit jeweils einer Kante auf den Außenkonturen liegen,
und die eine (90) und die andere (110) Werkzeughälfte kollineare Biegelinien (170) aufweisen, deren Aneinanderreihung jeden der zwei Teilbereiche (60) mit quadratischen Außenkonturen (60) in zwei Rechtecke halbiert und die zwei Teilbereiche (60) mit quadratischen Außenkonturen (60) insgesamt in vier Rechtecke unterteilt,
und die eine (90) und die andere (110) Werkzeughälfte diagonal ausgerichtete Biegelinien (180) aufweisen, deren Verlängerungen die Außenkonturen in einem 45-Grad-Winkel (a) schneiden, wobei alle diagonalen Biegelinien (180), die der einen Werkzeughälfte (90) zugeordnet sind und in dem Abschnitt für den ersten Teilbereich (130) liegen, eine identische Gesamtlänge aufweisen, wie alle diagonalen Biegelinien (180) der einen Werkzeughälfte (90) in dem Abschnitt für den zweiten Teilbereich (150) und alle diagonalen Biegelinien (180), die der anderen Werkzeughälfte (110) zugeordnet sind und in dem Abschnitt für den ersten Teilbereich (130) liegen, eine identische Gesamtlänge aufweisen, wie alle diagonalen Biegelinien (180) der anderen Werkzeughälfte (90) in dem Abschnitt für den zweiten Teilbereich (150).

2. Verfahren zur Herstellung eines Faltkerns (50, 190, 300, 360, 370, 380) für eine Leichtbaustruktur nach Anspruch 1, **dadurch gekennzeichnet, dass** ein größenskalierter Faltkern (50, 190, 300, 360, 370, 380) hergestellt wird, indem das verwendete Umformwerkzeug wenigstens einen zusätzlichen Abschnitt für einen zusätzlichen ersten Teilbereich und/oder wenigstens einen zusätzlichen Abschnitt für einen zusätzlichen zweiten Teilbereich umfasst,
wobei sich jeder vorhandene zusätzliche Abschnitt für einen zusätzlichen ersten Teilbereich entweder in einer y-Richtung an eine Außenkontur eines anderen ersten Teilbereichs (130) anschließt oder sich in einer x-Richtung an eine Außenkontur eines zweiten Teilbereichs (150) anschließt und
wobei sich jeder vorhandene zusätzliche Abschnitt für einen zusätzlichen zweiten Teilbereich entweder in y-Richtung an eine Außenkontur eines anderen zweiten Teilbereichs (150) anschließt oder sich in x-Richtung an eine Außenkontur eines ersten Teilbereichs (130) anschließt und
somit zumindest ein zusätzlicher kongruenter Teilbereich (60) des umformbaren flächigen Halbzeugs (40) umgeformt wird.

3. Verfahren zur Herstellung eines Faltkerns (50, 190, 300, 360, 370, 380) für eine Leichtbaustruktur nach Anspruch 1 oder 2, **dadurch gekennzeichnet, dass** bei nicht-formstabilen Halbzeugen eine Nachbehandlung zur Herstellung formstabiler Eigenschaften und bei formstabilen Halbzeugen eine Erzeugung von Prozessbedingungen zur Herstellung nicht-formstabiler Eigenschaften erfolgt.

4. Faltkern (50, 190, 300, 360, 370, 380) für eine Leichtbaustruktur, hergestellt aus einem umformbaren flächigen Halbzeug (40), umfassend zwei Arten von Elementarzellen (10, 20, 30), die miteinander paarweise vorliegen, wobei die erste Art von Elementarzellen (20) und die zweite Art von Elementarzellen (30) aus zwei kongruenten Teilbereichen mit quadratischen Außenkonturen (60) des Halbzeugs (40) in einem Verfahren nach einem der Ansprüche 1 bis 3 hergestellt sind.

5. Faltkern (50, 190, 300, 360, 370, 380) für eine Leichtbaustruktur nach Anspruch 4, **dadurch gekennzeichnet, dass** die Elementarzellen (10) an einer Oberseite (200) und an einer Unterseite (210) jeweils in einer Ebene (220, 230) enden.

6. Faltkern (50, 190, 300, 360, 370, 380) für eine Leichtbaustruktur nach Anspruch 4 oder 5, **dadurch gekennzeichnet, dass** dieser eine Anzahl an Paaren von Elementarzellen (10) der ersten Art (20) und der zweiten Art (30) umfasst, so dass der Faltkern (50, 190, 300, 360, 370, 380) entsprechend dieser Anzahl größenskaliert ist.

7. Strukturbauteil (240, 270, 320), umfassend einen Faltkern (50, 190, 300, 360, 370, 380) nach einem der Ansprüche 4 bis 6 und wenigstens einen weiteren Faltkern (50, 190, 300, 340, 360, 370, 380), wobei der Faltkern und der weitere Faltkern (50, 190, 300, 340, 360, 370, 380) ineinandergesteckt sind.

8. Strukturbauteil (240, 270, 320) nach Anspruch 7, **dadurch gekennzeichnet, dass** ein erster Faltkern (50, 190, 300, 340, 360, 370, 380) aus anderen Elementarzellen (20, 30) besteht, als ein zweiter Faltkern (50, 190, 300, 340, 360, 370, 380).

## Claims

1. A method for producing a folding core (50, 190, 300, 360, 370, 380) for a lightweight structure, wherein, in a first method step, bending lines (70, 170, 180) are applied onto a deformable flat semi-finished product (40) which is deformed in two congruent partial areas with square outer contours (60) and a shared bending line (70), with a deforming tool comprising two tool halves (80), by one tool half (90) generating a first deformation force (120) which is directed against a second deformation force (100) generated by another tool half (110) and which two forces act orthogonally in relation to the flat semi-finished product (40) and then, in a second method step, a three-dimensional folding core (50, 190, 300, 360, 370, 380) is produced, by transverse forces being simultaneously applied, which have an orthogonal direction of impact in relation to each other and to the first (120) and second deformation force (100),
**characterized in that**
the one tool half (90) has bending lines which in the center in a section provided for the first partial area (130) of the one tool half (90) form a square (140), the edges of which run parallel to the outer contours of the first partial area (130), and
the one tool half (90) has further bending lines which, in a section provided for the second partial area (150) of the one tool half (90), form two rectangles (160) which lie on the outer contours with one edge respectively,
and the one (90) and the other (110) tool half have collinear bending lines (170), the stringing together of which halves each of the two partial areas (60) with square outer contours (60) into two rectangles and divides the two partial areas (60) with square outer contours (60) into four rectangles in total,
and the one (90) and the other (110) tool half have diagonally aligned bending lines (180), the extensions of which cut the outer contours at a 45-degree angle (a), wherein all diagonal bending lines (180) which are assigned to the one tool half (90) and lie in the section for the first partial area (130) have a total length that is identical to all diagonal bending lines (180) of the one tool half (90) in the section for the second partial area (150), and all diagonal bending lines (180) which are assigned to the other tool half (110) and lie in the section for the first partial area (130) have a total length that is identical to all diagonal bending lines (180) of the other tool half (90) in the section for the second partial area (150).

2. The method for producing a folding core (50, 190, 300, 360, 370, 380) for a lightweight structure according to Claim 1, **characterized in that** a dimensionally scaled folding core (50, 190, 300, 360, 370, 380) is produced, by the deformation tool used comprising at least one additional section for an additional first partial area and/or at least one additional section for an additional second partial area,
wherein each existing additional section for an additional first partial area either adjoins an outer contour of another first partial area (130) in a y-direction or adjoins an outer contour of a second partial area (150) in an x direction, and
wherein each existing additional section for an additional second partial area either adjoins an outer contour of another second partial area (150) in a y-direction or adjoins an outer contour of a first partial area (130) in an x direction and
thus, at least one additional congruent partial area (60) of the deformable flat semi-finished product (40) is deformed.

3. The method for producing a folding core (50, 190, 300, 360, 370, 380) for a lightweight structure according to Claim 1 or 2, **characterized in that** with non-dimensionally stable semi-finished products subsequent treatment is carried out to achieve dimensionally stable properties, and with dimensionally stable products process conditions are generated to achieve non-dimensionally stable properties.

4. The folding core (50, 190, 300, 360, 370, 380) for a lightweight structure, produced from a deformable flat semi-finished product (40) comprising two types of elementary cells (10, 20, 30) which are present in pairs with each other, wherein the first type of elementary cells (20) and the second type of elementary cells (30) are produced from two congruent partial areas with square outer contours (60) of the semi-finished product (40) by a method according to any one of Claims 1 to 3.

5. The folding core (50, 190, 300, 360, 370, 380) for a lightweight structure according to Claim 4, **characterized in that** the elementary cells (10) end in one plane (220, 230) on an upper side (200) and on a lower side (210) respectively.

6. The folding core (50, 190, 300, 360, 370, 380) for a lightweight structure according to Claim 4 or 5, **characterized in that** said core comprises a quantity of pairs of elementary cells (10) of the first type (20) and of the second type (30) so that the folding core (50, 190, 300, 360, 370, 380) is dimensionally scaled in accordance with this quantity.

7. A structural part (240, 270, 320) comprising a folding core (50, 190, 300, 360, 370, 380) according to any one of Claims 4 to 6 and at least one further folding core (50, 190, 300, 340, 360, 370, 380), wherein the folding core and the further folding core (50, 190, 300, 340, 360, 370, 380) are slotted together.

8. The structural part (240, 270, 320) according to Claim 7, **characterized in that** a first folding core (50, 190, 300, 340, 360, 370, 380) consists of different elementary cells (20, 30) to a second folding core (50, 190, 300, 340, 360, 370, 380).

## Revendications

1. Procédé de fabrication d'une âme pliée (50, 190, 300, 360, 370, 380) pour une structure de construction légère, où, lors d'une première étape de procédé, des lignes de pliage (70, 170, 180) sont appliquées sur un produit semi-fini (40) plat déformable, transformé en deux zones partielles congruentes à contours extérieurs carrés (60) et à ligne de pliage (70) commune au moyen d'un outil de formage comportant deux moitiés d'outil (80), une moitié d'outil (90) générant une première force de déformation (120), de direction opposée à une deuxième force de déformation (100) générée par une autre moitié d'outil (110), les deux agissant orthogonalement au produit semi-fini plat (40), une âme pliée tridimensionnelle (50, 190, 300, 360, 370, 380) étant ensuite produite lors d'une deuxième étape de procédé, des forces transversale étant simultanément appliquées, lesquelles présentent des directions d'action orthogonales entre elles et par rapport à la première (120) et à la deuxième forces de déformation (100),
**caractérisé en ce que**
la première moitié d'outil (90) présente des lignes de pliage qui forment un carré (140) au centre d'une partie de la première moitié d'outil (90) prévue pour la première zone partielle (130), dont les bords s'étendent parallèlement aux contours extérieurs de la première zone partielle (130), et
la première moitié d'outil (90) présente d'autres lignes de pliage qui forment deux rectangles (160) dans une partie de la première moitié d'outil (90) prévue pour la deuxième zone partielle (150), un bord de chaque rectangle coïncidant avec le contour extérieur, et
la première moitié d'outil (90) et l'autre moitié d'outil (110) présentent des lignes de pliage colinéaires (170), dont l'alignement partage en deux rectangles chacune des deux zones partielles (60) à contours extérieurs carrés (60) et divise les deux zones partielles (60) à contours extérieurs carrés (60) en quatre rectangles au total,
la première moitié d'outil (90) et l'autre moitié d'outil (110) présentent des lignes de pliage diagonales (180), dont les prolongements coupent les contours extérieurs en formant un angle de 45° (a), toutes les lignes de pliage diagonales (180) affectées à la première moitié d'outil (90) et situées dans la partie pour la première zone partielle (130) ayant une même longueur totale, de même que toutes les lignes de pliage diagonales (180) de la première moitié d'outil (90) dans la partie pour la deuxième zone partielle (150) et toutes les lignes de pliage diagonales (180) affectées à l'autre moitié d'outil (110) et situées dans la partie pour la première zone partielle (130) ont une même longueur totale, de même que toutes les lignes de pliage diagonales (180) de l'autre moitié d'outil (90) dans la partie pour la deuxième zone partielle (150).

2. Procédé de fabrication d'une âme pliée (50, 190, 300, 360, 370, 380) pour une structure de construction légère selon la revendication 1, **caractérisé en ce qu'**une âme pliée (50, 190, 300, 360, 370, 380) de grande échelle est produite **en ce que** l'outil de formage utilisé comprend au moins une partie additionnelle pour une première zone partielle additionnelle et/ou au moins une partie additionnelle pour une deuxième zone partielle additionnelle,
chaque partie additionnelle existante pour une première zone partielle additionnelle étant soit adjacente à un contour extérieur d'une autre première zone partielle (130) dans une direction y, soit adjacente à un contour extérieur d'une deuxième zone partielle (150) dans une direction x, et
chaque partie additionnelle existante pour une deuxième zone partielle additionnelle étant soit adjacente à un contour extérieur d'une autre deuxième zone partielle (150) dans une direction y, soit adjacente à un contour extérieur d'une première zone partielle (130) dans une direction x, et
au moins une zone partielle (60) congruente du produit semi-fini (40) plat déformable étant ainsi transformée.

3. Procédé de fabrication d'un âme pliée (50, 190, 300, 360, 370, 380) pour une structure de construction légère selon la revendication 1 ou la revendication 2, **caractérisé en ce qu'**un traitement consécutif pour l'obtention de propriétés d'indéformabilité est appliqué en cas de produits semi-finis non dimensionnellement stables, et **en ce que** des conditions de processus sont formées pour l'obtention de propriétés de déformabilité en cas de produits semi-finis dimensionnellement stables.

4. Âme pliée (50, 190, 300, 360, 370, 380) pour une structure de construction légère, produite à partir d'un produit semi-fini (40) plat déformable, comprenant deux types de cellules élémentaires (10, 20, 30) associés en paire, le premier type de cellules élémentaires (20) et le deuxième type de cellules élémentaires (30) étant produits à partir de deux zones partielles congruentes à contours extérieurs carrés (60) du produit semi-fini (40) avec un procédé selon l'une quelconque des revendications 1 à 3.

5. Âme pliée (50, 190, 300, 360, 370, 380) pour une structure de construction légère selon la revendication 4, **caractérisée en ce que** les cellules élémentaires (10) se terminent chacune par un plan (220, 230) sur une face supérieure (200) et sur une face inférieure (210).

6. Âme pliée (50, 190, 300, 360, 370, 380) pour une structure de construction légère selon la revendication 4 ou 5, **caractérisé en ce que** celle-ci comprend une pluralité de paires de cellules élémentaires (10) du premier type (20) et du deuxième type (30), si bien que l'échelle de grandeur de l'âme pliée (50, 190, 300, 360, 370, 380) est fonction de cette pluralité.

7. Composant structurel (240, 270, 320), comprenant une âme pliée (50, 190, 300, 360, 370, 380) selon l'une des revendications 4 à 6 et au moins une autre âme pliée (50, 190, 300, 340, 360, 370, 380), l'âme pliée et l'autre âme pliée (50, 190, 300, 340, 360, 370, 380) étant imbriquées l'une dans l'autre.

8. Composant structurel (240, 270, 320) selon la revendication 7, **caractérisé en ce qu'**une première âme pliée (50, 190, 300, 340, 360, 370, 380) est constituée d'autres cellules élémentaires (20, 30) qu'une deuxième âme pliée (50, 190, 300, 340, 360, 370, 380).
